(19) Europäisches Patentamt
European Patent Office
Office européen des brevets

(11) **EP 4 738 294 A1**

(12) **EUROPEAN PATENT APPLICATION**

(43) Date of publication:
06.05.2026 Bulletin 2026/19

(21) Application number: 25210574.7

(22) Date of filing: 22.10.2025

(51) International Patent Classification (IPC):
**G07C 5/00** (2006.01)     **G07C 5/08** (2006.01)
**B64F 5/60** (2017.01)     **G05B 23/02** (2006.01)

(52) Cooperative Patent Classification (CPC):
**G07C 5/006; G05B 23/0275; G05B 23/0283;**
**G07C 5/0808; G07C 5/0841;** B64D 2045/0085;
B64F 5/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 31.10.2024 US 202418933140

(71) Applicant: **General Electric Company**
**Cincinnati, Ohio 45215 (US)**

(72) Inventors:
• **COMBS, Nicholas**
**Evendale, 45215 (US)**
• **MARTÍNEZ CASTILLO, Fernando**
**76146 Querétaro (MX)**
• **KETELAAR, Patrick John**
**West Chester, 45069 (US)**
• **JUAREZ GARCIA, Jorge Cristopher**
**76146 Querétaro (MX)**
• **MERSHON, Martin Scott**
**Evendale, 45215 (US)**

(74) Representative: **Openshaw & Co.**
**8 Castle Street**
**Farnham, Surrey GU9 7HR (GB)**

(54) **JET TURBINE ENGINE MONITORING AND MAINTENANCE METHOD AND APPARATUS**

(57) A control circuit (102, 103) determines (201) a first period of time during which an apparatus (100) was operating, then aggregates (202) data from a plurality of data sources (101) that corresponds to that first period of time to provide aggregated data, and then determines (203) whether the aggregated data meets a standard for quantitative sufficiency. By one approach, determining whether the aggregated data meets a standard for quantitative sufficiency can comprise determining whether the aggregated data meets a standard for quantitative sufficiency as a function of assessing the intermittency of data from at least some of the plurality of data sources. Assessing that intermittency of data from at least some of the plurality of data sources can comprise comparing (302) received data to corresponding intermittency signatures.

FIG. 2

EP 4 738 294 A1

**Description**

TECHNICAL FIELD

These teachings relate generally to data flow monitoring and more particularly to data flow monitoring corresponding to the operation of jet turbine engines.

BACKGROUND

Many apparatuses, such as jet turbine engines, have multiple sources of data pertaining to the operation of the apparatus. The resultant data can help to predict maintenance actions or to diagnose non-standard operations.

BRIEF DESCRIPTION OF DRAWINGS

Various needs are at least partially met through provision of the jet turbine engine monitoring and maintenance apparatus and method described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:

FIG. 1A comprises a block diagram as configured in accordance with various embodiments of these teachings;
FIG. 1B comprises a block diagram as configured in accordance with various embodiments of these teachings;
FIG. 2 comprises a flow diagram as configured in accordance with various embodiments of these teachings;
FIG. 3 comprises a flow diagram as configured in accordance with various embodiments of these teachings;
FIG. 4 comprises a flow diagram as configured in accordance with various embodiments of these teachings;
FIG. 5 comprises a schematic diagram as configured in accordance with various embodiments of these teachings;
FIG. 6 comprises a screen shot as configured in accordance with various embodiments of these teachings;
FIG. 7 comprises a screen shot as configured in accordance with various embodiments of these teachings; and
FIG. 8 comprises a graphic depiction as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

DETAILED DESCRIPTION

In order to use analytics to accurately predict maintenance actions or to diagnose or troubleshoot non-standard operations, the applicant has determined that such analysis should be informed as to whether a given apparatus has in fact operated, whether data was received for that operation, and whether the received data is complete. These can be significant challenges, particularly in the context of aviation application settings.

Generally speaking, the various aspects of the present disclosure can be employed with a method for use with an apparatus (such as a jet turbine engine) having a plurality of data sources, operating periods of time (such as flight time for an aircraft), and non-operating periods of time. These teachings can provide for a control circuit determining a first period of time during which the apparatus was operating, then aggregating data from the plurality of data sources that corresponds to that first period of time to provide aggregated data, and then determining whether the aggregated data meets a standard for quantitative sufficiency.

By one approach, determining whether the aggregated data meets a standard for quantitative sufficiency can comprise determining whether the aggregated data meets a standard for quantitative sufficiency as a function of assessing the intermittency of data from at least some of the plurality of data sources. Assessing that intermittency of data from at least some of the plurality of data sources can comprise comparing received data to corresponding intermittency signatures for the at least some of the plurality of data sources. By one approach, at least some of those corresponding intermittency signatures can represent normal intermittency.

By one approach, comparing the received data to corresponding intermittency signatures for the at least some of the plurality of data sources can comprise forming received data intermittency signatures for the at least some of the plurality of data sources and then comparing the received data intermittency signatures against the corresponding intermittency signatures to identify abnormal intermittency.

By one approach, assessing the intermittency of data from at least some of the plurality of data sources can comprise representing the data from at least some of the plurality of data sources with binary representations.

If desired, and by one approach, when the aggregated data fails to meet the standard for quantitative sufficiency, these teachings will accommodate identifying at least one candidate root cause as a function, at least in part, of the data source intermittency. For example, these teachings will accommodate identifying at least one candidate root cause as a function, at least in part, of data source intermittency by identifying at least one candidate root cause as a function, at least in part, of a generated signature of data source intermittency.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

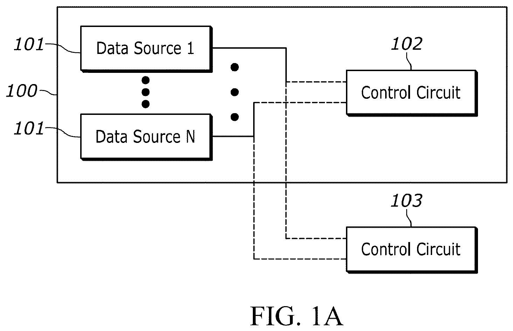

The foregoing and other benefits may become clearer upon making a thorough review and study of the following detailed description. Referring now to the drawings, and in particular to FIG. 1A, an illustrative apparatus 100 that represents an application setting that is compatible with many of these teachings will first be presented. This illustrative apparatus 100 includes a plurality of data sources 101 (denoted as "data source 1" through a "data source N," where "N" may be any integer greater than 1).

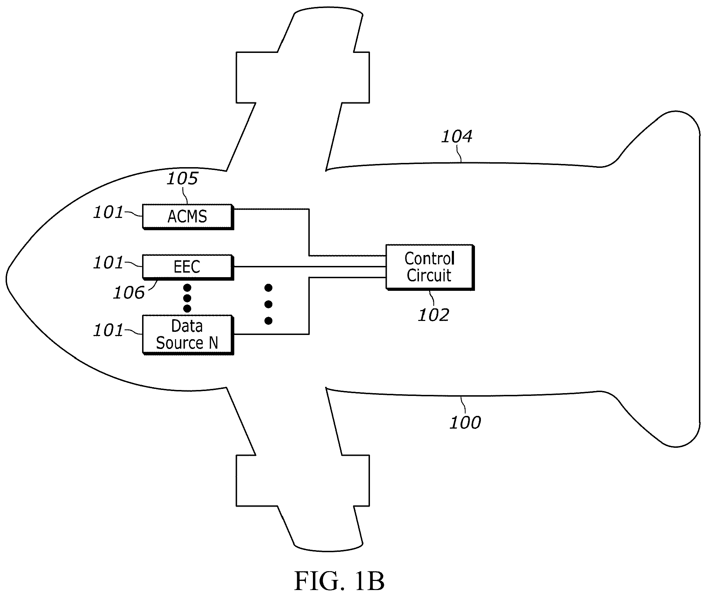

For the sake of an illustrative example, and referring to FIG. 1B, this description will presume that the apparatus 100 comprises a jet turbine engine-powered aircraft 104 such as a passenger, cargo, or military jetliner. In such a case, the data sources 101 may be such things as an Aircraft Condition Monitoring System (ACMS) 105 (which can typically monitor the condition of an aircraft by recording and monitoring flight parameters and information from aircraft systems and components), an Electronic Engine Control (EEC) 106, as well as any of a wide variety of discrete sensors and control modules/components. For example, the Aircraft Condition Monitoring System 105 can include data sources that capture data corresponding to start, takeoff, climb, and cruise states of operation of the aircraft and the Electronic Engine Control 106 can include data sources that capture data corresponding to descent and landing states of operation.

The steps, actions, and functions described herein can be carried out by a control circuit. That control circuit may comprise a part of the foregoing apparatus 100 (as denoted by reference numeral 102) and/or may comprise an off-board hardware system (as denoted by reference numeral 103). This/these control circuits 102/103 are communicatively coupled to the data sources 101 to receive data from the foregoing data sources 101 as described herein.

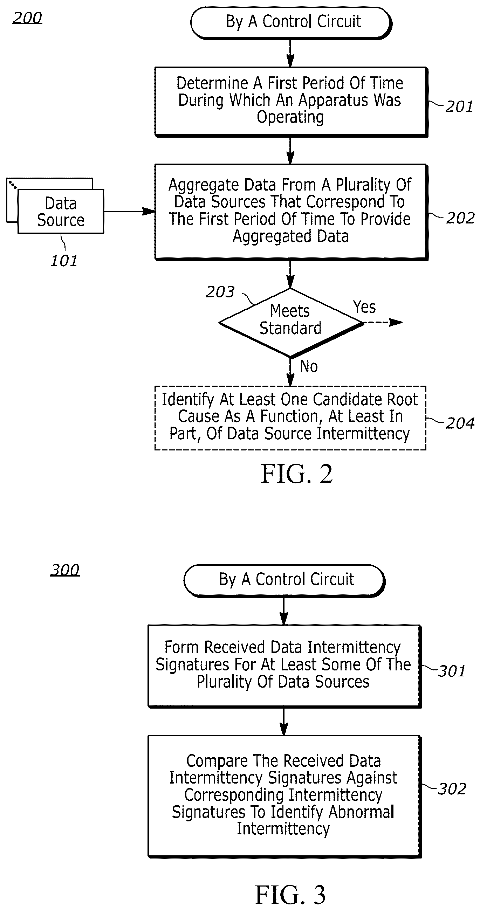

FIG. 2 presents a process 200 that can be carried out by the aforementioned control circuit(s) 102, 103 with respect to an apparatus (such as that described above with respect to FIG. 1) having a plurality of data sources 101, operating periods of time, and non-operating periods of time. When the apparatus comprises an aircraft, the aforementioned operating periods of time can correspond to flight times for the aircraft (and, in such a case, the aforementioned non-operating periods of time can correspond to times when the aircraft is not in flight).

At block 201, the control circuit(s) 102, 103 determine a first period of time during which the apparatus was operating. For example, when the apparatus comprises an aircraft, the control circuit(s) 102, 103 can determine a first period of time during which the aircraft was in flight (with what comprises being "in flight" being discussed in more detail herein). Because data flow from aircraft can be unidirectional, identifying when the asset was operated can be useful to measuring whether sufficient data is/was received for analytic execution.

By one approach, this determination can occur in real-time or near real-time (for example, while the aircraft is in flight). By another approach, this determination can occur after one or more such flights have concluded. Depending upon the location of the relevant control circuit(s) 102, 103, this determination can occur on-board the aircraft and/or remotely from and external to the aircraft.

Such a determination can be based upon any of a variety of information sources. Examples include, but are not limited to, on-board in-flight sensors, other sensors that may provide information from which flight status can be inferred, and/or records of flight-time status that may be available on-board the aircraft or remotely therefrom. By one approach, once an operation is confirmed to have occurred, various data sources can be leveraged to identify the beginning and end of the operation. Some illustrative examples of such data sources include, but are not limited to, report generation times, remotely-monitored takeoff/landing times, and weight-on-wheels switch activation time.

For the sake of simplicity and a clear example, this description refers to determining a "first period of time." These teachings, however, will readily accommodate determining a plurality of discrete periods of time during which the apparatus was operating. For example, in the case of an aircraft, block 201 may comprise determining two or more discrete time periods during which the aircraft was in flight (such as, on a given day, a first flight from San Jose, California to Reno, Nevada, and a second flight that same day from Reno, Nevada to Portland, Oregon).

At block 202, this process 200 provides for aggregating data from the plurality of data sources 101 that corresponds to the first period of time to provide corresponding aggregated data. (When this process is working with a plurality of discrete periods of time, this block 202 can include aggregating first data from the plurality of data sources 101 that correspond to the first period of time, aggregating second data from the plurality of data sources for a second discrete period of time during which the apparatus was operating, and so forth.) This activity does not necessarily presume to process the data from the plurality of data sources 101 in any particular way (such as by compression, filtering, normalizing, decoding, decrypting, or otherwise), but these teachings will accommodate such processing if desired to suit the needs and/or requirements of a given application setting.

At decision block 203, this process 200 provides for determining whether the aggregated data meets a standard for quantitative sufficiency. By one approach, this determination can comprise determining whether the aggregated data meets a standard for quantitative sufficiency as a function of assessing the intermittency of data from at least some (or all) of the plurality of data sources 101. Intermittency refers to temporal interruptions in the flow of data, which temporal interruptions can be brief or relatively lengthy, as well as expected (in ordinary course of operation) or unexpected intermittency. (Examples in the foregoing regards are provided further below.)

By one approach, assessing the intermittency of data from at least some of the plurality of data sources 101 can comprise comparing received data to corresponding intermittency signatures for the at least some (or all) of the plurality of data sources 101. By one approach, at least some of those corresponding intermittency signatures represent normal intermittency (where "normal intermittency," for example, can refer to a degree and extent of intermittency that has been previously observed and measured, perhaps over many hours of flights and over many flights, when the data sources 101 are understood to have been operating in a normal and expected manner). These teachings would also accommodate having and applying intermittency signatures that represent abnormal intermittency. (Examples in the foregoing regards are provided further below.)

Referring momentarily to FIG. 3, this figures provides an illustrative example of a process 300 for comparing the aforementioned received data from the data sources 101 to corresponding intermittency signatures for the at least some of the plurality of data sources 101 by, at block 301, forming received data intermittency signatures for the at least some of the plurality of data sources, and then, at block 302, comparing the received data intermittency signatures against the corresponding intermittency signatures to identify abnormal intermittency.

Referring again to FIG. 2, in lieu of the foregoing or in combination therewith, these teachings will also accommodate assessing the intermittency of data from at least some of the plurality of data sources 101 by representing the data from at least some of the plurality of data sources with binary representations.

When the foregoing determination regarding whether the aggregated data meets the standard (or standards) for quantitative sufficiency, these teachings will accommodate any of a variety of responses, including essentially no response whatsoever. By another approach, further use of the aggregated data (and/or the underlying data that formed the basis of the aggregated data) can be enabled, either passively (by not blocking access) or by affirmatively indicating compliance with the foregoing standard.

When the foregoing determination regarding whether the aggregated data meets the standard for quantitative sufficiency is negative (for example, when Meets Standard = NO according to decision block 203), these teachings will again accommodate any of a variety of responses. By one optional approach as shown at block 204 in FIG. 2, this process 200 may provide for identifying at least one candidate root cause of the lack of quantitative sufficiency as a function, at least in part, of data source intermittency at block 204. By one approach, these teachings will accommodate identifying the at least one candidate root cause as a function, at least in part, of data source intermittency by identifying the at least one candidate root cause as a function, at least in part, of a generated signature of data source intermittency. For example, a root cause may be determined for any data gaps found during an identification phase by evaluating the signature of the data reception.

By one approach, these teachings will accommodate determining whether to trigger a maintenance activity as regards an on-board component of the jet turbine engine-powered aircraft 104 as a function of the aforementioned at least one candidate root cause. In such a case, these teachings can then provide for determining whether to trigger a maintenance activity for an operator of the jet turbine engine-powered aircraft 104 or for a manufacturer of the jet turbine engine-powered aircraft 104.

Upon determining to trigger a maintenance activity for the operator of the jet turbine engine-powered aircraft 104, the control circuit 102 can trigger that maintenance activity for the operator of the jet turbine engine-powered aircraft. Following that triggering of the maintenance activity for the operator of the jet turbine engine-powered aircraft 104, the operator can conduct the corresponding maintenance activity. Examples of maintenance for an operator can be many and varied and can include, for example, both traditional line maintenance and so-called base (or hangar) maintenance. A non-exclusive listing of illustrative maintenance activities includes checking fluid levels (such as oil or hydraulic fluid), tire pressures, and control surfaces, and ensuring that such systems are functioning correctly, making a visual inspection for any damage, leaks, or wear, making minor repairs, servicing, and replacement of components. Further examples include repairing or replacing faulty components pertaining to jet turbine engines (including fan blades, the oil system, the combustion section, and turbine blades), visual or augmented inspection (using, for example, nondestructive testing techniques such as ultrasound, x-ray, and magnetic particle inspections) for cracks, corrosion, and structural integrity of the fuselage, wings, and other load-bearing components, checking, updating, and/or repairing the aircraft's electronic systems, including navigation, communication, radar, flight control systems, and onboard computers, and so forth.

In lieu of the foregoing, or in combination therewith, upon determining to trigger a maintenance activity for the manufacturer of the jet turbine engine-powered aircraft, these teachings can provide for the control circuit 102 triggering a specified maintenance activity for the manufacturer of the jet turbine engine-powered aircraft, following which the manufacturer of the jet turbine engine-powered aircraft 104 can conduct the corresponding maintenance activity. Maintenance activities for the manufacturer can include, if desired, the same maintenance activities as may be performed by the operator but can also include more extensive inspections, repairs, and rebuilding and/or upgrades that may require (or at least benefit from) more extensive knowledge or resources than the operator may have at their disposal. The manufacturer, for example, may have the facilities to conduct so-called off-wing inspections, testing, and repairs or even essentially completely disassembling and reassembling an aircraft.

So configured, these teachings can facilitate quantifying data that has been received as versus data that was expected, identifying a data insufficiency issue as a function of that quantification, determining a root cause of the issue, and then resolving that cause and hence the issue. This comprehensive assessment of data reception can therefore enable detecting and isolating system issues and resolving such issues in a timely and partially (or wholly) automated manner.

Further details that comport with these teachings will now be presented. It will be understood that the specific details of these examples are intended to serve an illustrative purpose and are not intended to suggest any particular limitations with respect to these teachings.

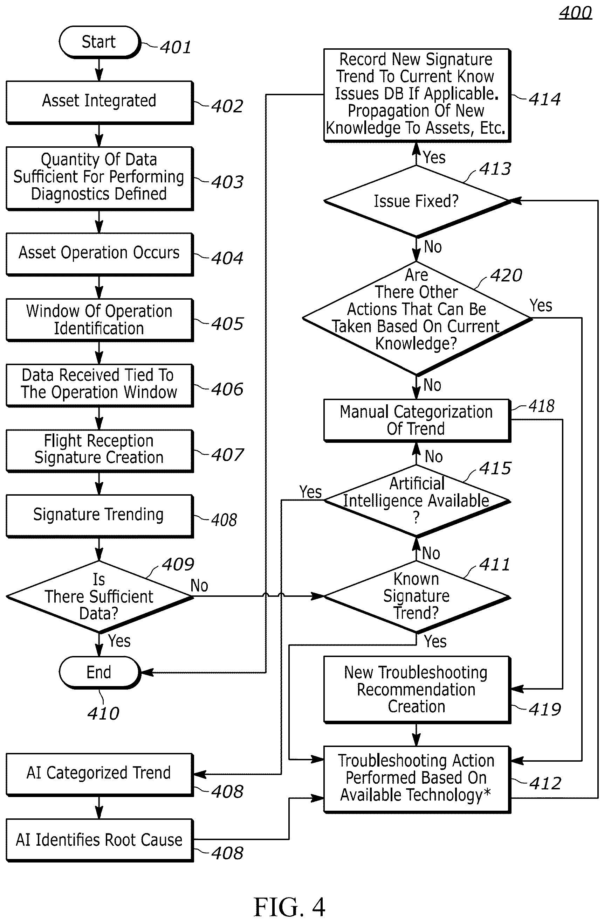

FIG. 4 presents such a process 400. At block 401 the process 400 begins and at block 402 conducts asset integration. (For example, a manufacturer can maintain an accessible record of both the existence of manufactured/distributed assets and the entity with whom/which each such asset currently resides.) At block 402 the process 400 defines the quantity of data that is sufficient for performing diagnostics.

At block 404, operation of the asset (such as an aircraft) occurs (for example, the aircraft begins flight operations), and at block 405 a corresponding window of operation (i.e., a time-based window) is identified. At block 406, received data is tied (i.e., temporally correlated) to the aforementioned time window of operation, and at block 407, a flight reception signature (or signatures, as appropriate) is created. At block 408, the signatures are trending. (As determined, for example, via visual representative plotting and/or alternately successive correlations per operation. Such contextual information can be helpful because without such context, a signature that happens in an informational vacuum may not be accurately interpreted; trend information can help to assure accurate diagnosis.)

At block 409 the process 400 determines whether there is sufficient data (that is, that at least an expected quantity of data has been received for the time period in question). To be clear, this determination does not take into account the substantive quality of the data (that is, whether the data appears to be accurate or corrupted, for example). When true, this process 400 can conclude at block 410.

When not true, this process 400 determines whether there is a known signature trend in evidence at block 411. If so, at block 412 the process 400 performs troubleshooting actions based on available technology. For example, these actions might include providing a user with troubleshooting recommendations, providing troubleshooting recommendations directly to the asset itself, authorizing self-correcting actions at the asset, and so forth. At block 413 the process 400 provides for determining whether the foregoing troubleshooting actions have fixed the issue. When true, at block 414 the process 400 can provide for recording a new signature trend to a current known issues database (when applicable) and/or other propagating updated knowledge information to this or other assets or other stakeholder entities as appropriate (following which the process 400 can conclude at block 410).

Referring back to decision block 411, where there is no known signature trend, at block 415 the process 400 determines whether one or more suitable artificial intelligence platforms are available. A suitable artificial intelligence platform can comprise, for example, a suitably trained neural network that can predict a likely trend categorization based on the available data. When such is the case, at block 416 the process utilizes the available artificial intelligence(s) to categorize the trend(s) and at block 417 the artificial intelligence(s) identifies the root cause(s) as well. The process 400 can then proceed with the troubleshooting step at block 412 as described above.

When there is no available artificial intelligence, the process 400 can proceed with manual categorization of the trend(s) which can lead, at block 419, to creation of a new troubleshooting recommendation, following which the process 400 can again proceed with the above-described troubleshooting step at block 412.

Referring back to decision block 413, when the process 400 concludes that the issue has not been resolved, at block 420 the process 400 can determine whether there are other actions that can be taken based on current knowledge. When true, the process 400 can proceed to the above-described troubleshooting activity at block 412. When not true, the process 400 can proceed to above-described block 418 to facilitate manual configuration of the trend.

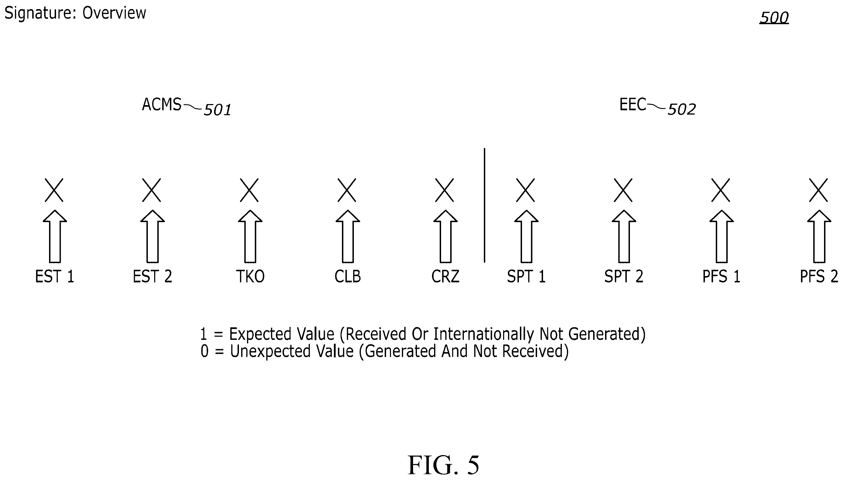

FIG. 5 presents an illustrative schematic overview example of a received data intermittency signature 500. This signature considers received data from an Aircraft Condition Monitoring System (ACMS) 501 and from an Electronic Engine Control (EEC) 502. For the ACMS 501 this data includes EST 1 data, EST 2 data, TKO data, CLB data, and CRZ data, and for the EEC 502 this data includes SPT 1 data, SPT 2 data, PFS 1 data, and PFS 2 data. The "X's" are fields that contain the corresponding quantitative reception indicator. In this example, that field, for each data item, may be either a "1" (indicating an expected value; in particular, that data was received or was not received because the data was known to be intentionally not generated) or a "0" (indicating an unexpected value because the data was generated but not received or data that was otherwise unintentionally not generated). A signature may also include a value such as "X" to indicate that the data is neither expected nor unexpected. (To be clear, these are quantitative reception indicators, and do not represent whether received data was qualitatively appropriate. In other words, incorrectly-generated data can be accepted here as an expected value because this signature is concerned with an expected reception of data as versus the quality of received data.)

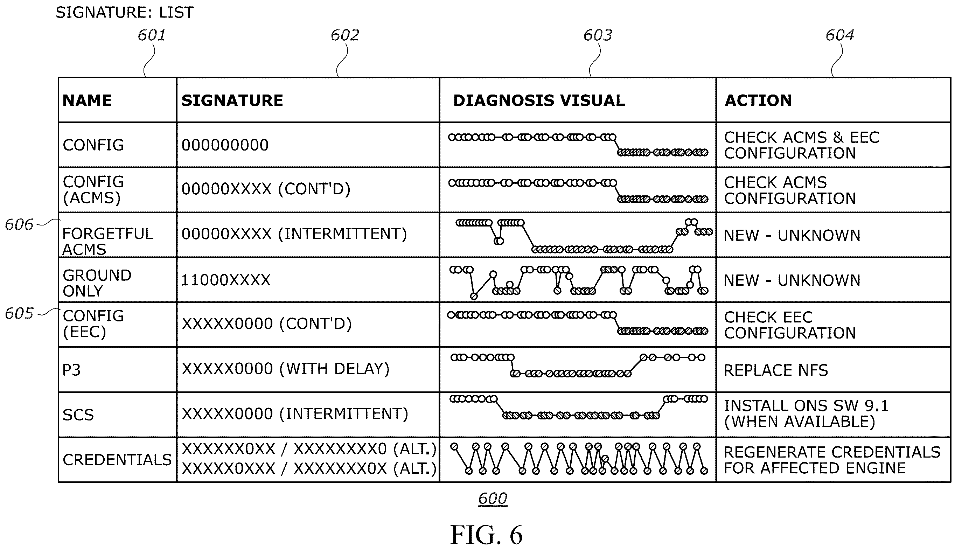

FIG. 6 presents an illustrative listing 600 of signatures. A first row 601 presents, line by line, signature names as provided by a user. A second row 602 presents the actual corresponding signature itself (following, in this example, the format presented in FIG. 5). A third row 603 presents a graphic representation of a visual diagnosis, and a fourth row 604 presents a brief description of a corresponding remediating action.

As one example provided in FIG. 6, one of the signature rows 605 has the corresponding remediating action of checking the EEC configuration. Another of the signature rows (denoted by reference numeral 606 is new to the system and has no specific corresponding correcting action.

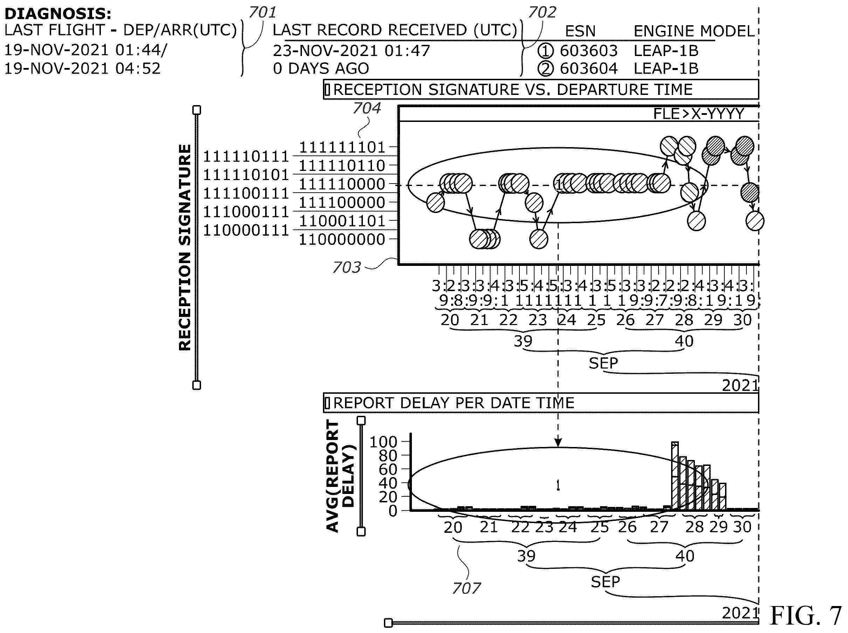

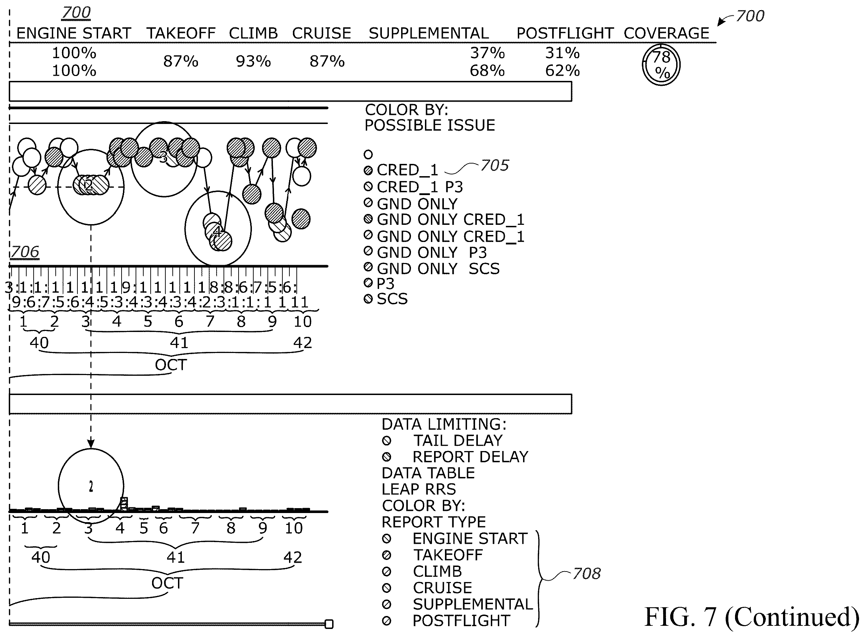

FIG. 7 presents an illustrative detailed view of a graphic representation 700 of a visual diagnosis as mentioned above. This representation 700 includes corresponding information 701 regarding flight departure and arrival times along with corresponding information 702 regarding the timing of a last received record.

The area generally denoted by reference numeral 703 presents a graph depicting a reception signature versus flight time. In this example, various signatures are presented along the Y axis as denoted by reference numeral 704. In this example, on the opposite side of the graph is presented various possible issues that are each correlated to a different corresponding color as denoted by reference numeral 705. The X axis of the graph, and the central area 706 of this graph area 703, presents color-based markers that correlate various ones of the signatures 704 to a corresponding one of the possible issues 705 as a function of in-flight time.

A lower part of this graphic presentation (as generally denoted by reference numeral 707) presents reporting delays as a function of time. A color-coding key that indicates the report type is denoted by reference numeral 708. For example, in this example, the color blue can correlate to "engine start," the color green can correlate to "take off," the color red can correlate to "climb," the color yellow can correlate to "cruise," the color purpose can correlate to "supplemental," and the color orange can correlate to "post flight."

In this example, various portions of the upper graph are correlated to plurality of corresponding portions of the lower graph via circles/ellipses. The ellipses show where, for a same signature, one instance is followed by delay while another is not, thus leading to differing root cause identifications.

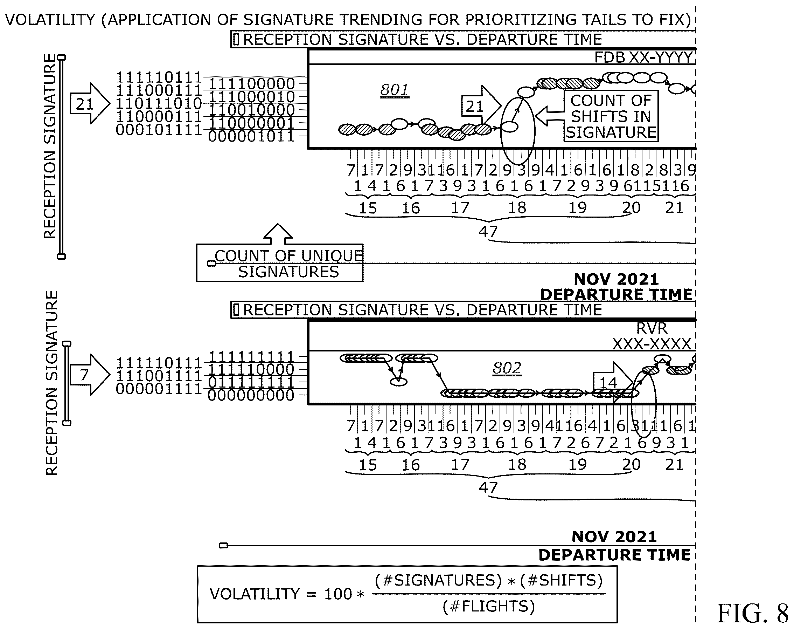

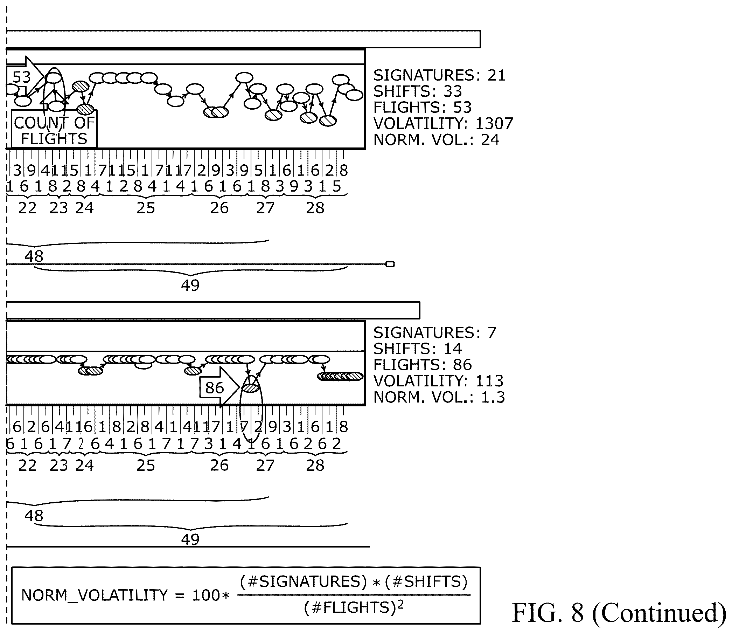

FIG. 8 presents an approach for applying these teachings with respect to volatility via application of signature trending to prioritizing tails (i.e., aircraft) to be inspected and/or fixed. Volatility can be defined as

$$volatility = 100 * \frac{(\#signatures) * (\#shifts)}{(\#flights)}$$

and a normalized volatility value can be defined as

$$norm\_volatility = 100 * \frac{(\#signatures) * (\#shifts)}{(\#flights)^2}$$

In a first illustrative example 801, there are 21 unique signatures, 33 shifts, and 53 flights. Volatility can therefore be calculated as 1307 and normalized volatility as 24. In a second illustrative example 802, there are 7 unique signatures, 14 shifts, and 86 flights. Volatility can therefore be calculated as 113 and normalized volatility as 1.3.

Depending on the resources available to rectify identified issues (here assuming manual remediation), the foregoing teachings can help to identify which issues to pursue first. Typically those aircraft presenting lower volatility will have easier issues to remedy (possibly the preference for an operator to pursue), whereas those with high volatility will tend to require more extensive troubleshooting (possibly the preference for a manufacturer to pursue). Additionally, the normalized volatility can permit the removal of the factor of prioritizing between aircraft that are flying frequently as compared to aircraft that are only flying less frequently.

Further aspects of the disclosure are provided by the subject matter of the following clauses:

Clause 1. A method for use with a jet turbine engine-powered aircraft an apparatus having a plurality of data sources, operating periods of time, and non-operating periods of time, the plurality of data sources including an Aircraft Condition Monitoring System and an Electronic Engine Control, the method comprising: by a control circuit: determining a first period of time during which the jet turbine engine-powered aircraft apparatus was operating; aggregating data from the plurality of data sources that corresponds to the first period of time to provide aggregated data; determining whether the aggregated data meets a standard for quantitative sufficiency; when the aggregated data fails to meet the standard for quantitative sufficiency, identifying at least one candidate root cause as a function, at least in part, of data source intermittency; determining whether to trigger a maintenance activity as regards an on-board component of the jet turbine engine-powered aircraft as a function of the at least one candidate root cause; upon determining to trigger a maintenance activity, determining whether to trigger a maintenance activity for an operator of the jet turbine engine-powered aircraft or for a manufacturer of the jet turbine engine-powered aircraft; upon determining to trigger a maintenance activity for the operator of the jet turbine engine-powered aircraft, triggering the maintenance activity for the operator of the jet turbine engine-powered aircraft; following the triggering of the maintenance activity for the operator of the jet turbine engine-powered aircraft, the operator conducting the maintenance activity; upon determining to trigger a maintenance activity for the manufacturer of the jet turbine engine-powered aircraft, triggering the maintenance activity for the manufacturer of the jet turbine engine-powered aircraft; and following the triggering of the maintenance activity for the manufacturer of the jet turbine engine-powered aircraft, the manufacturer conducting the maintenance activity.

Clause 2. The method of any preceding clause wherein the Aircraft Condition Monitoring System includes data sources that capture data corresponding to start, takeoff, climb, and cruise states of operation and the Electronic Engine Control includes data sources that capture data corresponding to descent and landing states of operation.

Clause 3. The method of any preceding clause wherein the operating periods of time each correspond to a flight time for the jet turbine engine-powered aircraft.

Clause 4. The method of any preceding clause wherein determining whether the aggregated data meets a standard for quantitative sufficiency comprises determining whether the aggregated data meets a standard for quantitative sufficiency as a function of assessing intermittency of data from at least some of the plurality of data sources.

Clause 5. The method of any preceding clause wherein assessing the intermittency of data from at least some of the plurality of data sources comprises comparing received data to corresponding intermittency signatures for the at least some of the plurality of data sources.

Clause 6. The method of any preceding clause wherein at least some of the corresponding intermittency signatures represent normal intermittency.

Clause 7. The method of any preceding clause wherein comparing the received data to corresponding intermittency signatures for the at least some of the plurality of data sources comprises: forming received data intermittency signatures for the at least some of the plurality of data sources; and comparing the received data intermittency signatures against the corresponding intermittency signatures to identify abnormal intermittency.

Clause 8. The method of any preceding clause wherein assessing the intermittency of data from at least some of the plurality of data sources comprises representing the data from at least some of the plurality of data sources with binary representations.

Clause 9. The method of any preceding clause further comprising: when the aggregated data fails to meet the standard for quantitative sufficiency, identifying at least one candidate root cause as a function, at least in part, of data source intermittency.

Clause 10. The method of any preceding clause wherein identifying the at least one candidate root cause as a function, at least in part, of data source intermittency comprises identifying the at least one candidate root cause as a function, at least in part, of a generated signature of data source intermittency.

Clause 11. An apparatus for use with a jet turbine engine-powered aircraft first apparatus having a plurality of data sources, operating periods of time, and non-operating periods of time, the plurality of data sources including an Aircraft Condition Monitoring System and an Electronic Engine Control, the apparatus comprising: a control circuit configured to: determine a first period of time during which the jet turbine engine-powered aircraft first apparatus was operating; aggregate data from the plurality of data sources that corresponds to the first period of time to provide aggregated data; determine whether the aggregated data meets a standard for quantitative sufficiency; when the aggregated data fails to meet the standard for quantitative sufficiency, identifying at least one candidate root cause as a function, at least in part, of data source intermittency; determining whether to trigger a maintenance activity as regards an on-board component of the jet turbine engine-powered aircraft as a function of the at least one candidate root cause; upon determining to trigger a maintenance activity, determine whether to trigger a maintenance activity for an operator of the jet turbine engine-powered aircraft or for a manufacturer of the jet turbine engine-powered aircraft; upon determining to trigger a maintenance activity for the operator of the jet turbine engine-powered aircraft, trigger the maintenance activity for the operator of the jet turbine engine-powered aircraft; and upon determining to trigger a maintenance activity for the manufacturer of the jet turbine engine-powered aircraft, trigger the maintenance activity for the manufacturer of the jet turbine engine-powered aircraft.

Clause 12. The apparatus of any preceding clause wherein the Aircraft Condition Monitoring System includes data sources that capture data corresponding to start, takeoff, climb, and cruise states of operation and the Electronic Engine Control includes data sources that capture data corresponding to descent and landing states of operation.

Clause 13. The apparatus of any preceding clause wherein the operating periods of time each correspond to a flight time for the jet turbine engine-powered aircraft.

Clause 14. The apparatus of any preceding clause wherein the control circuit is configured to determine whether the aggregated data meets a standard for quantitative sufficiency by determining whether the aggregated data meets a standard for quantitative sufficiency as a function of assessing intermittency of data from at least some of the plurality of data sources.

Clause 15. The apparatus of any preceding clause wherein the control circuit is configured to assess the intermittency of data from at least some of the plurality of data sources by comparing received data to corresponding intermittency signatures for the at least some of the plurality of data sources.

Clause 16. The apparatus of any preceding clause wherein at least some of the corresponding intermittency signatures represent normal intermittency.

Clause 17. The apparatus of any preceding clause wherein the control circuit is configured to compare the received data to corresponding intermittency signatures for the at least some of the plurality of data sources by: forming received data intermittency signatures for the at least some of the plurality of data sources; and comparing the received data intermittency signatures against the corresponding intermittency signatures to identify abnormal intermittency.

Clause 18. The apparatus of any preceding clause wherein the control circuit is configured to assess the intermittency of data from at least some of the plurality of data sources by representing the data from at least some of the plurality of data sources with binary representations.

Clause 19. The apparatus of any preceding clause wherein the control circuit is further configured to: when the aggregated data fails to meet the standard for quantitative sufficiency, identify at least one candidate root cause as a function, at least in part, of data source intermittency.

Clause 20. The apparatus of any preceding clause wherein the control circuit is configured to identify the at least one candidate root cause as a function, at least in part, of data source intermittency by identifying the at least one candidate root cause as a function, at least in part, of a generated signature of data source intermittency.

**Claims**

1. A method for use with a jet turbine engine-powered aircraft (100) having a plurality of data sources (101), operating periods of time, and non-operating periods of time, the plurality of data sources including an Aircraft Condition Monitoring System (105) and an Electronic Engine Control (106), the method comprising:
   by a control circuit (102, 103):

   determining (201) a first period of time during which the jet turbine engine-powered aircraft was operating;
   aggregating (202) data from the plurality of data sources that corresponds to the first period of time to provide aggregated data;
   determining (203) whether the aggregated data meets a standard for quantitative sufficiency;
   when the aggregated data fails to meet the standard for quantitative sufficiency, identifying (204) at least one candidate root cause as a function, at least in part, of data source intermittency;
   determining whether to trigger a maintenance activity as regards an on-board component of the jet turbine engine-powered aircraft as a function of the at least one candidate root cause;
   upon determining to trigger a maintenance activity, determining whether to trigger a maintenance activity for an operator of the jet turbine engine-powered aircraft or for a manufacturer of the jet turbine engine-powered aircraft;
   upon determining to trigger a maintenance activity for the operator of the jet turbine engine-powered aircraft, triggering the maintenance activity for the operator of the jet turbine engine-powered aircraft;

following the triggering of the maintenance activity for the operator of the jet turbine engine-powered aircraft, the operator conducting the maintenance activity;

upon determining to trigger a maintenance activity for the manufacturer of the jet turbine engine-powered aircraft, triggering the maintenance activity for the manufacturer of the jet turbine engine-powered aircraft; and

following the triggering of the maintenance activity for the manufacturer of the jet turbine engine-powered aircraft, the manufacturer conducting the maintenance activity.

2. The method of claim 1 wherein the Aircraft Condition Monitoring System (105) includes data sources that capture data corresponding to start, takeoff, climb, and cruise states of operation and the Electronic Engine Control (106) includes data sources that capture data corresponding to descent and landing states of operation.

3. The method of claim 2 wherein the operating periods of time each correspond to a flight time for the jet turbine engine-powered aircraft (100).

4. The method of any of claims 1-3 wherein determining (203) whether the aggregated data meets a standard for quantitative sufficiency comprises determining whether the aggregated data meets a standard for quantitative sufficiency as a function of assessing intermittency of data from at least some of the plurality of data sources.

5. The method of claim 4 wherein assessing the intermittency of data from at least some of the plurality of data sources comprises comparing received data to corresponding intermittency signatures for the at least some of the plurality of data sources.

6. The method of claim 5 wherein at least some of the corresponding intermittency signatures represent normal intermittency.

7. The method of claim 5 or 6 wherein comparing the received data to corresponding intermittency signatures for the at least some of the plurality of data sources comprises:

forming (301) received data intermittency signatures for the at least some of the plurality of data sources; and comparing (302) the received data intermittency signatures against the corresponding intermittency signatures to identify abnormal intermittency.

8. The method of any of claims 4-6 wherein assessing the intermittency of data from at least some of the plurality of data sources comprises representing the data from at least some of the plurality of data sources with binary representations.

9. The method of any of claims 1-7 further comprising:
when the aggregated data fails to meet the standard for quantitative sufficiency, identifying (204) at least one candidate root cause as a function, at least in part, of data source intermittency.

10. The method of claim 9 wherein identifying the at least one candidate root cause as a function, at least in part, of data source intermittency comprises identifying the at least one candidate root cause as a function, at least in part, of a generated signature of data source intermittency.

11. An apparatus for use with a jet turbine engine-powered aircraft (100) having a plurality of data sources (101), operating periods of time, and non-operating periods of time, the plurality of data sources including an Aircraft Condition Monitoring System (105) and an Electronic Engine Control (106), the apparatus comprising:

a control circuit (102. 103) configured to:

determine (201) a first period of time during which the jet turbine engine-powered aircraft was operating;
aggregate (202) data from the plurality of data sources that corresponds to the first period of time to provide aggregated data;
determine (203) whether the aggregated data meets a standard for quantitative sufficiency;

when the aggregated data fails to meet the standard for quantitative sufficiency, identifying (204) at least one candidate root cause as a function, at least in part, of data source intermittency;

determining whether to trigger a maintenance activity as regards an on-board component of the jet turbine engine-powered aircraft as a function of the at least one candidate root cause;

upon determining to trigger a maintenance activity, determine whether to trigger a maintenance activity for an operator of the jet turbine engine-powered aircraft or for a manufacturer of the jet turbine engine-powered aircraft;

upon determining to trigger a maintenance activity for the operator of the jet turbine engine-powered aircraft, trigger the maintenance activity for the operator of the jet turbine engine-powered aircraft; and

upon determining to trigger a maintenance activity for the manufacturer of the jet turbine engine-powered aircraft, trigger the maintenance activity for the manufacturer of the jet turbine engine-powered aircraft.

12. The apparatus of claim 11 wherein the Aircraft Condition Monitoring System (105) includes data sources that capture data corresponding to start, takeoff, climb, and cruise states of operation and the Electronic Engine Control (106) includes data sources that capture data corresponding to descent and landing states of operation.

13. The apparatus of any of claims 11-12 wherein the control circuit (102, 103) is configured to execute the method of any of claims 1-10.

101

100

101

Data Source 1

Data Source N

102

Control Circuit

103

Control Circuit

FIG. 1A

FIG. 1B

**200**

By A Control Circuit

Determine A First Period Of Time During Which An Apparatus Was Operating ~201

Data Source

101

Aggregate Data From A Plurality Of Data Sources That Correspond To The First Period Of Time To Provide Aggregated Data ~202

203

Meets Standard

Yes

No

Identify At Least One Candidate Root Cause As A Function, At Least In Part, Of Data Source Intermittency ~204

FIG. 2

**300**

By A Control Circuit

Form Received Data Intermittency Signatures For At Least Some Of The Plurality Of Data Sources ~301

Compare The Received Data Intermittency Signatures Against Corresponding Intermittency Signatures To Identify Abnormal Intermittency ~302

FIG. 3

*400*

FIG. 4

Signature: Overview                                                                                      500

ACMS~501                                                                        EEC~502

EST 1      EST 2      TKO      CLB      CRZ      SPT 1      SPT 2      PFS 1      PFS 2

1 = Expected Value (Received Or Internationally Not Generated)
0 = Unexpected Value (Generated And Not Received)

FIG. 5

EP 4 738 294 A1

SIGNATURE: LIST

| NAME | SIGNATURE | DIAGNOSIS VISUAL | ACTION |
|---|---|---|---|
| CONFIG | 000000000 | | CHECK ACMS & EEC CONFIGURATION |
| CONFIG (ACMS) | 00000XXXX (CONT'D) | | CHECK ACMS CONFIGURATION |
| FORGETFUL ACMS | 00000XXXX (INTERMITTENT) | | NEW - UNKNOWN |
| GROUND ONLY | 11000XXXX | | NEW - UNKNOWN |
| CONFIG (EEC) | XXXXX0000 (CONT'D) | | CHECK EEC CONFIGURATION |
| P3 | XXXXX0000 (WITH DELAY) | | REPLACE NFS |
| SCS | XXXXX0000 (INTERMITTENT) | | INSTALL ONS SW 9.1 (WHEN AVAILABLE) |
| CREDENTIALS | XXXXXX0XX / XXXXXXXX0 (ALT.) XXXXX0XXX / XXXXXXX0X (ALT.) | | REGENERATE CREDENTIALS FOR AFFECTED ENGINE |

601    602    603    604

606    605

<u>600</u>

FIG. 6

EP 4 738 294 A1

EP 4 738 294 A1

**DIAGNOSIS:**
*701*
*702*

| LAST FLIGHT - DEP/ARR(UTC) | LAST RECORD RECEIVED (UTC) | ESN | ENGINE MODEL |
|---|---|---|---|
| 19-NOV-2021 01:44/ | 23-NOV-2021 01:47 | ① 603603 | LEAP-1B |
| 19-NOV-2021 04:52 | 0 DAYS AGO | ② 603604 | LEAP-1B |

**▯RECEPTION SIGNATURE VS. DEPARTURE TIME**

FLE>X-YYYY

RECEPTION SIGNATURE

*704*

111110111  111111101
111110101  111110110
111100111  111110000
111000111  111100000
110000111  110001101
110000000

*703*

3 2 3 3 4 3 5 4 5 3 4 3 5 3 3 2 2 2 4 3 4 3
9 8 9 9 1 1 1 1 1 1 1 1 1 9 9 7 9 8 1 9 1 9

20 21 22 23 24 25 26 27 28 29 30

39        40

SEP

2021

**▯REPORT DELAY PER DATE TIME**

AVG(REPORT DELAY)

100
80
60
40
20
0

20 21 22 23 24 25 26 27 28 29 30

*707*

39        40

SEP

2021

FIG. 7

## 700

| ENGINE START | TAKEOFF | CLIMB | CRUISE | SUPPLEMENTAL | POSTFLIGHT | COVERAGE |
|---|---|---|---|---|---|---|
| 100% | | | | | 37% | 31% |
| 100% | 87% | 93% | 87% | | 68% | 62% |

(78%) — 700

COLOR BY:
POSSIBLE ISSUE

○
◉ CRED_1 — 705
◎ CRED_1 P3
◎ GND ONLY
◉ GND ONLY CRED_1
◎ GND ONLY CRED_1
◎ GND ONLY P3
◎ GND ONLY SCS
◎ P3
◎ SCS

*706*

| | 3 | 1 | 1 | 1 | 1 | 1 | 1 | 1 | 9 | 1 | 1 | 1 | 1 | 1 | 8 | 8 | 6 | 7 | 5 | 6 | |
| 9 | 6 | 7 | 5 | 6 | 4 | 5 | 3 | 4 | 3 | 4 | 3 | 4 | 2 | 3 | 1 | 1 | 1 | 1 | 1 | 11 |
| 1 | | 2 | | 3 | | 4 | | 5 | | 6 | | 7 | | 8 | | 9 | | 10 | | | |

40       41      42

OCT

DATA LIMITING:
◎   TAIL DELAY
◎   REPORT DELAY
DATA TABLE
LEAP RRS
COLOR BY:
REPORT TYPE
◎   ENGINE START ⎫
◎   TAKEOFF       ⎪
◎   CLIMB          ⎬— 708
◎   CRUISE         ⎪
◎   SUPPLEMENTAL ⎪
◎   POSTFLIGHT   ⎭

| 1 | 2 | 3 | 4 | 5 | 6 | 7 | 8 | 9 | 10 |

40       41      42

OCT

FIG. 7 (Continued)

EP 4 738 294 A1

EP 4 738 294 A1

VOLATILITY (APPLICATION OF SIGNATURE TRENDING FOR PRIORITIZING TAILS TO FIX)

▯ RECEPTION SIGNATURE VS. DEPARTURE TIME

FDB XX-YYYY

RECEPTION SIGNATURE

21 →

111110111  111100000
111000111  111000010
110111010  110010000
110000111  110000001
000101111  000001011

_801_

21 →

COUNT OF SHIFTS IN SIGNATURE

7 1 7 2 9 3 16 1 7 2 9 3 9 4 1 6 1 6 1 8 2 8 3 9
1 4 1 6 1 7 3 9 3 1 6 1 6 1 7 2 9 3 9 6 11 5 116

15    16    17    18    19    20    21

47

COUNT OF UNIQUE SIGNATURES

NOV 2021
DEPARTURE TIME

▯ RECEPTION SIGNATURE VS. DEPARTURE TIME

RVR
XXX-XXXX

RECEPTION SIGNATURE

7 →

111110111  111111111
111001111  111110000
000001111  011111111
           000000000

_802_

14 →

7 1 7 2 9 3 16 1 7 2 9 3 9 4 1 16 4 1 6 3 1 1 1 6 1
1 4 1 6 1 7 3 9 3 1 6 1 6 1 7 2 6 7 2 1 6 9 3 1

15    16    17    18    19    20    21

47

NOV 2021
DEPARTURE TIME

$$\text{VOLATILITY} = 100 * \frac{(\#\text{SIGNATURES}) * (\#\text{SHIFTS})}{(\#\text{FLIGHTS})}$$

FIG. 8

SIGNATURES: 21
SHIFTS: 33
FLIGHTS: 53
VOLATILITY: 1307
NORM. VOL.: 24

53

COUNT OF FLIGHTS

3 9 4 1 15 1 7 15 1 7 17 2 9 3 9 5 1 6 1 6 2 8
1 6 1 8 2 8 4 1 2 8 4 1 4 1 6 1 6 1 8 3 9 3 1 5

22  23 24    25      26    27    28

48

49

SIGNATURES: 7
SHIFTS: 14
FLIGHTS: 86
VOLATILITY: 113
NORM. VOL.: 1.3

86

6 2 6 4 1 16 1 8 2 8 4 1 4 17 1 7 2 9 3 1 6 1 8
6 1 6 1 7 2 6 4 1 6 1 7 1 7 3 1 4 1 6 1 6 2 6 2

22  23 24    25      26    27    28

48

49

$$NORM\_VOLATILITY = 100 * \frac{(\#SIGNATURES) * (\#SHIFTS)}{(\#FLIGHTS)^2}$$

FIG. 8 (Continued)

Europäisches
Patentamt
European
Patent Office
Office européen
des brevets

# EUROPEAN SEARCH REPORT

**Application Number**

EP 25 21 0574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/409811 A1 (PASSEMARD PHILIPPE [FR] ET AL) 31 December 2020 (2020-12-31) | 1-6,8-13 | INV.<br>G07C5/00 |
| A | * paragraph [0002] - paragraph [0047] *<br>* claims 1-10 *<br>* figures 1-4 *<br>----- | 7 | G07C5/08<br>B64F5/60<br>G05B23/02 |
| A | US 2022/388689 A1 (KELLER JASON M [US] ET AL) 8 December 2022 (2022-12-08)<br>* paragraph [0002] - paragraph [0085] *<br>* claims 1-20 *<br>* figures 1-11 *<br>----- | 1-13 | |
| A | EP 3 413 246 A1 (KIDDE TECH INC [US]) 12 December 2018 (2018-12-12)<br>* paragraph [0010] - paragraph [0031] *<br>* claims 1-11 *<br>* figures 1-9 *<br>----- | 1-13 | |

**TECHNICAL FIELDS SEARCHED (IPC)**

G07C
B64F
G05B

The present search report has been drawn up for all claims

| Place of search | Date of completion of the search | Examiner |
|---|---|---|
| The Hague | 9 March 2026 | Neumann, Christoph |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 0574

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2026

| Patent document cited in search report | | | Publication date | Patent family member(s) | | | Publication date |
|---|---|---|---|---|---|---|---|
| US | 2020409811 | A1 | 31-12-2020 | FR | 3097840 | A1 | 01-01-2021 |
| | | | | US | 2020409811 | A1 | 31-12-2020 |
| US | 2022388689 | A1 | 08-12-2022 | CN | 115437817 | A | 06-12-2022 |
| | | | | EP | 4099116 | A1 | 07-12-2022 |
| | | | | US | 2022388689 | A1 | 08-12-2022 |
| EP | 3413246 | A1 | 12-12-2018 | EP | 3413246 | A1 | 12-12-2018 |
| | | | | US | 2019087789 | A1 | 21-03-2019 |

EPO FORM P0459

For more details about this annex : see Official Journal of the European Patent Office, No. 12/82